# EUROPEAN PATENT APPLICATION

(11) **EP 4 488 106 A1**
(43) Date of publication of application: **08.01.2025**
(21) Application number: 24186675.5
(22) Date of filing: 04.07.2024
(51) Int. Cl.: B60L 53/10, B60L 53/14, B60L 58/27, H02J 7/00

(54) **DIRECT CURRENT CHARGING APPARATUS, POWERTRAIN, AND ELECTRIC VEHICLE**

(30) Priority: 07.07.2023 CN 202310838512
(71) Applicant: Huawei Digital Power Technologies Co., Ltd., Shenzhen, Guangdong 518043 (CN)
(72) Inventor: CHENG, Yang, Shenzhen, 518043 (CN); FENG, Ningbo, Shenzhen, 518043 (CN); MO, Wei, Shenzhen, 518043 (CN)
(74) Representative: Gill Jennings & Every LLP

(57) **Abstract**

This application provides a direct current charging apparatus, a powertrain, and an electric vehicle. The direct current charging apparatus is configured to charge a power battery of the electric vehicle. The direct current charging apparatus includes a direct current charging interface, a switch module, and a direct current voltage conversion module. The direct current charging interface is configured to connect a positive electrode and a negative electrode of a power supply apparatus and a positive electrode and a negative electrode of the power battery to form a charging loop. The switch module is configured to connect or disconnect the charging loop. The direct current voltage conversion module is configured to output a preset direct current voltage to the positive electrode and the negative electrode of the power supply apparatus. According to the direct current charging apparatus, the powertrain, and the electric vehicle provided in this application, after a charging loop between the power battery of the electric vehicle and a charging pile is disconnected, when the charging loop is connected again, charging can be resumed without re-swiping a card/re-scanning a QR code by a user, thereby reducing user operations and improving user experience.

## Description

### TECHNICAL FIELD

Embodiments of this application relate to the field of new energy vehicles, and in particular, to a direct current charging apparatus, a powertrain, and an electric vehicle.

### BACKGROUND

With development of new energy vehicle technologies, many automobile manufacturers gradually launch electric vehicles. The electric vehicles have become the choice of many users because of characteristics of energy saving, environmental protection, and having a relatively mature technology.

After the electric vehicle is connected to a charging pile, the user usually needs to swipe a card/scan a QR code, and the charging pile charges the electric vehicle through a charging loop between a power battery and the charging pile. To ensure user safety, the electric vehicle needs to be charged in a non-operating mode. When the power battery of the electric vehicle is in a charging state, if the charging loop between the power battery of the electric vehicle and the charging pile is disconnected, the charging pile usually stops charging. After the charging loop between the power battery of the electric vehicle and the charging pile is connected again, the user usually needs to re-swipe the card/re-scan the QR code to control the charging pile to resume charging.

### SUMMARY

This application provides a direct current charging apparatus, a powertrain, and an electric vehicle. After a charging loop between a power battery of the electric vehicle and a charging pile is disconnected, when the charging loop is connected again, charging can be resumed without re-swiping a card/re-scanning a QR code by a user, thereby reducing user operations and improving user experience.

According to a first aspect, an embodiment of this application provides a direct current charging apparatus. The direct current charging apparatus is configured to charge a power battery of an electric vehicle. The direct current charging apparatus includes a direct current charging interface, a switch module and a direct current voltage conversion module. The direct current charging interface is configured to connect a positive electrode and a negative electrode of a power supply apparatus and a positive electrode and a negative electrode of the power battery to form a charging loop. The switch module is configured to connect or disconnect the charging loop. The direct current voltage conversion module is configured to output a preset direct current voltage to the positive electrode and the negative electrode of the power supply apparatus.

In this embodiment of this application, the direct current voltage conversion module included in the direct current charging apparatus has a function of outputting the preset direct current voltage to the positive electrode and the negative electrode of the power supply apparatus. When the direct current voltage conversion module needs to output the preset direct current voltage to the positive electrode and the negative electrode of the power supply apparatus, the direct current voltage conversion module may output the preset direct current voltage to the positive electrode and the negative electrode of the power supply apparatus. Therefore, the power supply apparatus is connected to the electric vehicle and charges the power battery of the electric vehicle. If the charging loop between the power battery of the electric vehicle and the power supply apparatus is disconnected, the direct current voltage conversion module outputs the preset direct current voltage to the power supply apparatus. When the charging loop is disconnected, the direct current voltage conversion module outputs the preset direct current voltage to the power supply apparatus. Therefore, after the charging loop is connected again, charging can be resumed without re-swiping a card/re-scanning a QR code by a user, thereby reducing user operations and improving user experience.

In an implementation of the first aspect, the switch module is configured to disconnect the charging loop in response to that the direct current voltage conversion module outputs the preset direct current voltage.

In this implementation, because the direct current voltage conversion module first outputs the preset direct current voltage, and the switch module disconnects the charging loop in response to that the direct current voltage conversion module outputs the preset direct current voltage, there is no possibility that the charging loop is disconnected and the direct current voltage conversion module does not output the preset direct current voltage. Therefore, this implementation can prevent the power supply apparatus from immediately raising an alarm when the power supply apparatus detects that the charging loop is disconnected but does not receive the preset direct current voltage, to reduce a possibility of raising an alarm by the power supply apparatus.

In an implementation of the first aspect, the direct current voltage conversion module is configured to: in response to that the switch module connects the charging loop, stop outputting the preset direct current voltage.

In this implementation, because the switch module first connects the charging loop, and in response to that the charging loop is connected, the direct current voltage conversion module stops outputting the preset direct current voltage, there is no possibility that the direct current voltage conversion module stops outputting the preset direct current voltage and the charging loop is disconnected. Therefore, this implementation can prevent the power supply apparatus from immediately raising an alarm when the power supply apparatus detects that the charging loop is disconnected but does not receive the preset direct current voltage, to reduce a possibility of raising an alarm by the power supply apparatus.

In an implementation of the first aspect, the switch module is configured to: disconnect the charging loop in response to that a temperature of the power battery is less than a preset temperature; or connect the charging loop in response to that a temperature of the power battery is greater than or equal to the preset temperature.

In this implementation, the switch module may choose to disconnect or connect the charging loop in cooperation with operation of a heating function of the power battery of the electric vehicle. The temperature of the power battery is relatively low, and the power battery needs to be heated. The switch module disconnects the charging loop in response to that the temperature of the power battery is less than the preset temperature. This avoids low charging power or even a charging failure caused by charging the power battery at a low temperature. As the temperature of the power battery gradually rises, the switch module connects the charging loop in response to that the temperature of the power battery is greater than or equal to the preset temperature. The power battery is charged when the power battery is suitable for charging. The charging power is normal, so that charging efficiency can be improved.

In an implementation of the first aspect, the direct current voltage conversion module is configured to: output the preset direct current voltage in response to that the temperature of the power battery is less than the preset temperature; or in response to that the temperature of the power battery is greater than or equal to the preset temperature, stopping outputting the preset direct current voltage.

In this implementation, the direct current voltage conversion module may choose to output or stop outputting the preset direct current voltage in cooperation with operation of the heating function of the power battery of the electric vehicle. The temperature of the power battery is relatively low, and the power battery needs to be heated. In a heating process of the power battery, the charging loop is disconnected. The direct current voltage conversion module outputs the preset direct current voltage in response to that the temperature of the power battery is less than the preset temperature, so that an alarm raised for disconnection of the charging loop can be avoided. As the temperature of the power battery gradually rises, in response to that the temperature of the power battery is greater than or equal to the preset temperature, the direct current voltage conversion module stops outputting the preset direct current voltage. This can avoid a continuous decrease in a voltage of the power battery caused by continuous output of the preset direct current voltage by the direct current voltage conversion module, protecting the power battery.

In an implementation of the first aspect, the direct current charging apparatus includes a control circuit. The control circuit is configured to: in response to that the direct current charging interface is connected to the positive electrode and the negative electrode of the power supply apparatus, control, based on a comparison result between the temperature of the power battery and the preset temperature, the direct current voltage conversion module to output or stop outputting the preset direct current voltage, and control the switch module to connect or disconnect the charging loop; or in response to that the direct current charging interface is not connected to the positive electrode or the negative electrode of the power supply apparatus, control the direct current voltage conversion module to stop outputting the preset direct current voltage.

In this implementation, in response to that the direct current charging interface is connected to the positive electrode and the negative electrode of the power supply apparatus, the control circuit controls, based on the comparison result between the temperature of the power battery and the preset temperature, the direct current voltage conversion module to output or stop outputting the preset direct current voltage and controls the switch module to connect or disconnect the charging loop. This avoids low charging power or even a charging failure caused by charging the power battery when the temperature of the power battery is excessively low, and further prevents the power supply apparatus from raising an alarm of a charging abnormality when the power supply apparatus detects that the charging loop is disconnected. In response to that the direct current charging interface is not connected to the positive electrode or the negative electrode of the power supply apparatus, the direct current voltage conversion module stops outputting the preset direct current voltage to the positive electrode and the negative electrode of the power supply apparatus. This can avoid a continuous decrease in the voltage of the power battery caused by continuous output of the preset direct current voltage converted from the power battery, to the positive electrode and the negative electrode of the power supply apparatus by the direct current voltage conversion module, protecting the power battery.

In an implementation of the first aspect, the electric vehicle includes a motor controller and a motor. The motor controller is configured to connect or disconnect a discharging loop between the power battery and the motor. The control circuit is configured to: in response to that the temperature of the power battery is less than the preset temperature, control the motor controller to connect the discharging loop; or in response to that the temperature of the power battery is greater than or equal to the preset temperature, control the motor controller to disconnect the discharging loop.

In this implementation, in response to that the temperature of the power battery is less than the preset temperature, the control circuit controls the motor controller to connect the discharging loop, to heat the power battery. This helps improve charging efficiency of the power battery. As the temperature of the power battery rises, in response to that the temperature of the power battery is greater than or equal to the preset temperature, the control circuit controls the motor controller to disconnect the discharging loop, to avoid overtemperature of the power battery.

In an implementation of the first aspect, the direct current charging interface includes two battery connection terminals and two power source connection terminals. The two battery connection terminals are respectively configured to connect to the positive electrode and the negative electrode of the power battery. The two power source connection terminals are respectively configured to connect to the positive electrode and the negative electrode of the power supply apparatus. The direct current voltage conversion module receives, through the two battery connection terminals, power supplied by the power battery. The direct current voltage conversion module outputs the preset direct current voltage through the two power source connection terminals.

In this implementation, the two battery connection terminals and the two power source connection terminals are terminals on the direct current charging interface. The direct current voltage conversion module receives, through the two battery connection terminals, power supplied by the power battery, and outputs the preset direct current voltage to the power supply apparatus through the two power source connection terminals. This can prevent the power supply apparatus from raising an alarm caused by a charging abnormality. In addition, the direct current voltage conversion module is connected to the two battery connection terminals and the two power source connection terminals on the direct current charging interface, and can be compatible with terminals on the direct current charging interface. This facilitates integration.

In an implementation of the first aspect, the direct current voltage conversion module includes a diode, a resistor, a capacitor, and a controllable switch. An anode of the diode is connected to one battery connection terminal. A cathode of the diode is connected to one power source connection terminal through the resistor and the controllable switch. The battery connection terminal is configured to connect to the positive electrode of the power battery. The power source connection terminal is configured to connect to the positive electrode of the power supply apparatus. One end of the capacitor is connected between the resistor and the switch. The other end of the capacitor is connected to the other battery connection terminal and the other power source connection terminal. The other battery connection terminal is configured to connect to the negative electrode of the power battery. The other power source connection terminal is configured to connect to the negative electrode of the power supply apparatus.

In this implementation, the direct current voltage conversion module includes the diode, the resistor, the capacitor, and the switch. When the switch is turned on, the direct current voltage conversion module outputs the preset direct current voltage to the power supply apparatus. When the switch is turned off, the direct current voltage conversion module stops outputting the preset direct current voltage to the power supply apparatus. A function of the direct current voltage conversion module can be implemented through a simple operation. In addition, the direct current voltage conversion module includes a few components. This facilitates integration, reduces costs, and has specific advantages.

In an implementation of the first aspect, the switch module includes other two controllable switches. One controllable switch is configured to connect or disconnect one power source connection terminal and one battery connection terminal. The other controllable switch is configured to connect or disconnect the other power source connection terminal and the other battery connection terminal.

According to a second aspect, an embodiment of this application provides a powertrain. The powertrain includes a motor, a motor controller, and the direct current charging apparatus in the first aspect. The motor controller is configured to connect or disconnect a discharging loop between a power battery and the motor.

In this embodiment of this application, the motor controller is configured to connect or disconnect the discharging loop between the power battery and the motor. The motor controller controls connection of the discharging loop in response to that the temperature of the power battery is less than the preset temperature, to heat the power battery. This helps improve charging efficiency of the power battery. As the temperature of the power battery rises, the motor controller controls disconnection of the discharging loop in response to that the temperature of the power battery is greater than or equal to the preset temperature, to avoid overtemperature of the power battery.

In an implementation of the second aspect, the motor controller is configured to connect the discharging loop in response to that the switch module disconnects the charging loop.

In this implementation, the charging loop is disconnected, indicating that the power battery is not suitable for charging at this time. The motor controller connects the discharging loop in response to that the switch module disconnects the charging loop, to heat the power battery. This avoids low charging power or even a charging failure caused by charging the power battery when the temperature of the power battery is excessively low.

In an implementation of the second aspect, the motor controller is configured to disconnect the discharging loop in response to that connection duration of the discharging loop is greater than or equal to preset duration.

In this implementation, as the discharging loop is connected, the temperature of the power battery continuously rises. When the connection duration of the discharging loop is greater than or equal to the preset duration, the power battery is suitable for charging. The motor controller disconnects the discharging loop in response to that the connection duration of the discharging loop is greater than or equal to the preset duration, to stop heating the power battery. This avoids impact of an excessively high temperature of the power battery on a lifespan of the power battery.

In an implementation of the second aspect, the motor controller includes a control circuit and an inverter circuit. The inverter circuit includes three bridge arm circuits. Two ends of each bridge arm are respectively configured to connect to a positive electrode and a negative electrode of the power battery. Bridge arm midpoints of the three bridge arm circuits each are configured to connect to a one-phase winding of the motor. The control circuit controls an upper bridge arm switching transistor of one bridge arm to be turned on, a lower bridge arm switching transistor of another bridge arm to be turned on, and the motor controller to connect the discharging loop. The control circuit controls upper bridge arm switching transistors and lower bridge arm switching transistor of a plurality of bridge arms to remain in a turn-off state, and the motor controller to disconnect the discharging loop.

In this implementation, the control circuit controls the upper bridge arm switching transistor of the bridge arm and the lower bridge arm switching transistor of the another bridge arm to be turned on, and the motor controller to connect the discharging loop, to heat the power battery. This helps improve charging efficiency of the power battery. The control circuit controls the upper bridge arm switching transistors and the lower bridge arm switching transistors of the plurality of bridge arms to remain in a turn-off state, and the motor controller to disconnect the discharging loop, to stop heating the power battery. This avoids impact of overtemperature of the power battery on the lifespan of the power battery.

For technical effect that is not mentioned and that is possibly achieved in the second aspect, refer to descriptions of technical effect that can be achieved by any possible design in the first aspect. Details are not described herein again.

According to a third aspect, an embodiment of this application provides an electric vehicle. The electric vehicle includes a power battery, a vehicle controller, a motor controller, a motor, and the direct current charging apparatus in the first aspect. The power battery includes a battery management unit. The battery management unit is configured to detect a temperature of the power battery. The vehicle controller is configured to control at least one of the direct current charging apparatus or the motor controller based on a comparison result between the temperature of the power battery and a preset temperature.

For any technical effect that can be possibly achieved in the third aspect, refer to descriptions of technical effect that can be achieved by any possible design in the first aspect. Details are not described herein again.

### BRIEF DESCRIPTION OF DRAWINGS

FIG. 1 is a diagram of an electric vehicle according to an embodiment of this application;
FIG. 2 is a diagram of a direct current charging apparatus according to an embodiment of this application;
FIG. 3 is another diagram of a direct current charging apparatus according to an embodiment of this application;
FIG. 4 is another diagram of a direct current charging apparatus according to an embodiment of this application;
FIG. 5 is a schematic of a current loop according to an embodiment of this application;
FIG. 6 is another diagram of a direct current charging apparatus according to an embodiment of this application;
FIG. 7 is a schematic of another current loop according to an embodiment of this application;
FIG. 8 is a diagram of a powertrain according to an embodiment of this application;
FIG. 9 is a schematic of a discharging loop according to an embodiment of this application;
FIG. 10 is a schematic of a charging loop according to an embodiment of this application; and
FIG. 11 is a diagram of a battery low-temperature heating method according to an embodiment of this application.

### DESCRIPTION OF EMBODIMENTS

The following describes technical solutions of embodiments in this application with reference to accompanying drawings.

In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases. Only A exists, both A and B exist, and only B exists.

Reference to "some embodiments" or the like described in this specification means that one or more embodiments of this application include a particular feature, structure, or characteristic described with reference to the embodiments. Therefore, statements such as "in some embodiments" that appear at different places in this specification do not necessarily mean reference to a same embodiment, instead, they mean "one or more but not all of embodiments", unless otherwise specifically emphasized. The terms "include", "comprise", "have", and their variants thereof all mean "include but are not limited to", unless otherwise specifically emphasized in another manner.

"Equal to" in this application is not an equal-to in a strict sense, but is within an allowable error range.

With development of new energy vehicle technologies, many automobile manufacturers gradually launch electric vehicles. The electric vehicles have become the choice of many users because of characteristics of energy saving, environmental protection, and having a relatively mature technology.

After the electric vehicle is connected to a charging pile, the user usually needs to swipe a card/scan a QR code, and the charging pile charges the electric vehicle through a charging loop between a power battery and the charging pile. To ensure user safety, the electric vehicle needs to be charged in a non-operating mode. When the power battery of the electric vehicle is in a charging state, if the charging loop between the power battery of the electric vehicle and the charging pile is disconnected, the charging pile usually stops charging. After the charging loop between the power battery of the electric vehicle and the charging pile is connected again, the user usually needs to re-swipe the card/re-scan the QR code to control the charging pile to resume charging.

On this basis, this application provides a direct current charging apparatus, a powertrain, and an electric vehicle. The direct current charging apparatus outputs a preset direct current voltage to a power supply apparatus according to a requirement. After a charging loop between a power battery of the electric vehicle and a charging pile is disconnected, when the charging loop is connected again, a user does not need to re-swipe a card/re-scan a QR code, thereby improving user experience. The following specifically describes the direct current charging apparatus, the powertrain, and the electric vehicle with reference to specific embodiments.

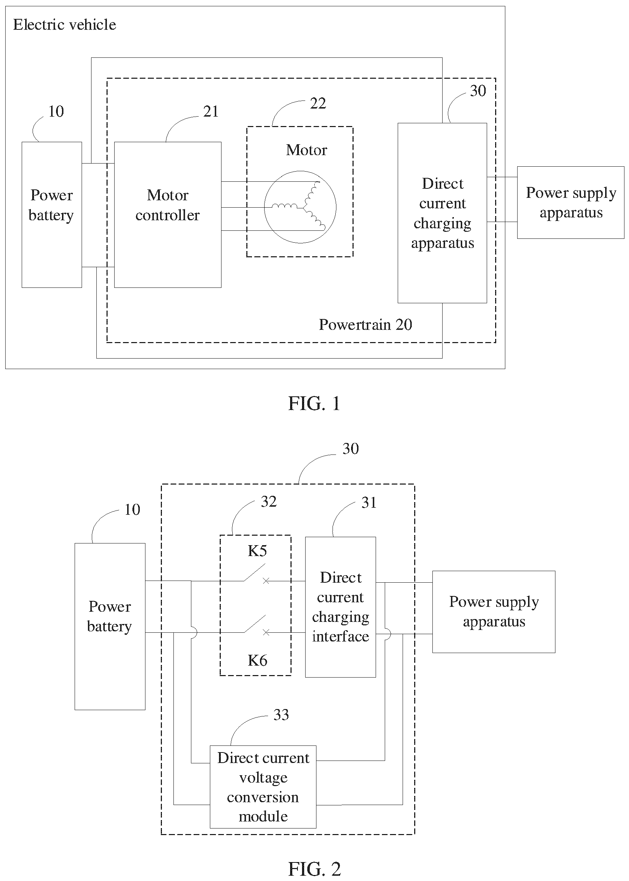

FIG. 1 is a diagram of an electric vehicle according to an embodiment of this application. As shown in FIG. 1, the electric vehicle includes a power battery 10 and a powertrain 20. The powertrain 20 is configured to drive the electric vehicle or heat the power battery 10. The powertrain 20 includes a motor controller 21, a motor 22, and a direct current charging apparatus 30. The motor controller 21 is configured to control the motor 22 to operate or stop operating.

FIG. 2 is a diagram of a direct current charging apparatus according to an embodiment of this application. The direct current charging apparatus 30 is configured to charge the power battery 10 of the electric vehicle. The direct current charging apparatus 30 includes a direct current charging interface 31, a switch module 32, and a direct current voltage conversion module 33.

In this embodiment of this application, the direct current charging interface 31 is configured to connect a positive electrode and a negative electrode of a power supply apparatus and a positive electrode and a negative electrode of the power battery 10 to form a charging loop.

The power supply apparatus in this embodiment of this application is an apparatus, for example, a charging pile, that provides charging energy. The power supply apparatus forms the charging loop with the power battery 10 through the direct current charging interface 31. The power supply apparatus is connected to the electric vehicle, and the power supply apparatus charges the power battery 10 of the electric vehicle through the direct current charging interface 31.

In this embodiment of this application, connection or disconnection of the charging loop is controlled by the switch module 32. The switch module 32 includes a controllable switch. When the controllable switch is turned on, the charging loop is connected. When the controllable switch is turned off, the charging loop is disconnected.

In this embodiment of this application, the direct current voltage conversion module 33 is configured to output a preset direct current voltage to the positive electrode and the negative electrode of the power supply apparatus.

In an implementation, the direct current voltage conversion module 33 is configured to: convert a voltage of the power battery 10 into the preset direct current voltage, and output the preset direct current voltage to the positive electrode and the negative electrode of the power supply apparatus. In an implementation, the direct current voltage conversion module 33 is configured to: convert a voltage of a storage battery of the electric vehicle into the preset direct current voltage, and output the preset direct current voltage to the positive electrode and the negative electrode of the power supply apparatus.

As described above, when the power battery of the electric vehicle is in a charging state, if the charging loop between the power battery of the electric vehicle and the charging pile is disconnected, the charging pile usually stops charging. In addition, in some scenarios, due to the disconnection of the charging loop, the charging pile may further raise an alarm of a charging abnormality. Therefore, the direct current voltage conversion module 33 in this embodiment of this application may output the preset direct current voltage to the positive electrode and the negative electrode of the power supply apparatus, to deceive the power supply apparatus that the charging loop between the power supply apparatus and the electric vehicle is still in a connected state, to prevent the power supply apparatus from raising an alarm.

The preset direct current voltage in this embodiment of this application is related to a minimum allowable voltage at which the charging loop formed by the power supply apparatus and the power battery 10 is disconnected but the power supply apparatus does not raise an alarm. For example, if the minimum allowable voltage of the power supply apparatus is 380 V, the preset direct current voltage is a voltage greater than or equal to 380 V. If the minimum allowable voltage of the power supply apparatus is 220 V, the preset direct current voltage is a voltage greater than or equal to 220 V. The direct current voltage conversion module 33 only needs to output the preset direct current voltage to the power supply apparatus.

In this embodiment of this application, the power supply apparatus is connected to the electric vehicle. After a user swipes a card/scans a QR code, the switch module 32 of the electric vehicle is turned on, and the power supply apparatus charges the power battery 10 through the direct current charging interface 31. However, in a process in which the power supply apparatus charges the power battery 10, in some scenarios, the switch module 32 needs to disconnect the charging loop. Once the charging loop is disconnected, the power supply apparatus considers that a charging abnormality occurs and raises an alarm. To prevent the power supply apparatus from raising an alarm of a charging abnormality when the charging loop is disconnected, the direct current voltage conversion module 33 outputs a voltage to the power supply apparatus, to deceive the power supply apparatus that the electric vehicle is still connected to the power supply apparatus currently. Because the power supply apparatus considers that the power supply apparatus is continuously connected to the electric vehicle, after the charging loop is connected again, charging can be resumed without re-swiping the card/re-scanning the QR code by the user.

In this embodiment of this application, the direct current voltage conversion module 33 included in the direct current charging apparatus 30 has a function of outputting the preset direct current voltage to the positive electrode and the negative electrode of the power supply apparatus. When the direct current voltage conversion module 33 needs to output the preset direct current voltage to the positive electrode and the negative electrode of the power supply apparatus, the direct current voltage conversion module 33 may output the preset direct current voltage to the positive electrode and the negative electrode of the power supply apparatus. Therefore, the power supply apparatus is connected to the electric vehicle and charges the power battery 10 of the electric vehicle. If the charging loop between the power battery 10 of the electric vehicle and the power supply apparatus is disconnected, the direct current voltage conversion module 33 outputs the preset direct current voltage to the power supply apparatus. When the charging loop is disconnected, the direct current voltage conversion module 33 outputs the preset direct current voltage to the power supply apparatus. Therefore, after the charging loop is connected again, the charging can be resumed without re-swiping the card/re-scanning the QR code by the user, thereby reducing user operations and improving user experience.

The foregoing embodiment describes functions of the switch module 32 and the direct current voltage conversion module 33. Operating logic of the switch module 32 and the direct current voltage conversion module 33 is described in detail below.

In an embodiment, the switch module 32 is configured to disconnect the charging loop in response to that the direct current voltage conversion module 33 outputs the preset direct current voltage.

In this embodiment of this application, in the process in which the power supply apparatus charges the power battery 10, in some scenarios, the direct current voltage conversion module 33 needs to output the preset direct current voltage to the power supply apparatus. In this embodiment of this application, because the direct current voltage conversion module 33 first outputs the preset direct current voltage, and the switch module 32 disconnects the charging loop only in response to that the direct current voltage conversion module 33 outputs the preset direct current voltage to the power supply apparatus, there is no possibility that the charging loop is disconnected and the direct current voltage conversion module 33 does not output the preset direct current voltage. This can prevent the power supply apparatus from immediately raising an alarm when the power supply apparatus detects that the charging loop is disconnected but does not receive the preset direct current voltage, to reduce a possibility of raising an alarm by the power supply apparatus.

It should be noted that in the process in which the power supply apparatus charges the power battery 10, if the switch module 32 first disconnects the charging loop, and the direct current voltage conversion module 33 outputs the preset direct current voltage to the power supply apparatus in response to the disconnection of the charging loop, there is a possibility that after the charging loop is disconnected, the direct current voltage conversion module 33 does not output the preset direct current voltage in time in a short period of time, and consequently the power supply apparatus raises an alarm. However, in this embodiment of this application, the switch module 32 disconnects the charging loop in response to that the direct current voltage conversion module 33 outputs the preset direct current voltage. This can prevent the power supply apparatus from immediately raising an alarm when the power supply apparatus detects that the charging interface is disconnected but does not receive the preset direct current voltage.

In an embodiment, the direct current voltage conversion module 33 is configured to: in response to that the switch module 32 connects the charging loop, stop outputting the preset direct current voltage.

In this embodiment of this application, when the direct current voltage conversion module 33 outputs the preset direct current voltage to the power supply apparatus and the switch module 32 disconnects the charging loop, the switch module 32 connects the charging loop according to a requirement. In this embodiment of this application, because the switch module 32 first connects the charging loop, and in response to the connection of the charging loop, the direct current voltage conversion module 33 stops outputting the preset direct current voltage to the positive electrode and the negative electrode of the power supply apparatus, there is no possibility that the direct current voltage conversion module 33 stops outputting the preset direct current voltage and the charging loop is disconnected. This can prevent the power supply apparatus from immediately raising an alarm when the power supply apparatus detects that the charging loop is disconnected but does not receive the preset direct current voltage, to reduce a possibility of raising an alarm by the power supply apparatus.

It should be noted that when the direct current voltage conversion module 33 outputs the preset direct current voltage to the power supply apparatus and the switch module 32 disconnects the charging loop, if the direct current voltage conversion module 33 first stops outputting the preset direct current voltage, and the switch module 32 connects the charging loop in response to stopping outputting the preset direct current voltage, there is a possibility that after output of the preset direct current voltage is stopped, the switch module 32 does not connect the charging loop in time in a short period of time. In this case, the charging loop is disconnected, the direct current voltage conversion module 33 stops outputting the voltage, and the power supply apparatus raises an alarm of a charging abnormality. However, in this embodiment of this application, in response to that the switch module 32 connects the charging loop, the direct current voltage conversion module 33 stops outputting the preset direct current voltage. This can prevent the power supply apparatus from immediately raising an alarm when the power supply apparatus detects that the charging interface is disconnected but does not receive the preset direct current voltage.

The following further describes an operating process of the switch module 32 and the direct current voltage conversion module 33 provided in this embodiment of this application.

In this embodiment of this application, the switch module 32 disconnects or connects the charging loop based on a comparison result between a temperature of the power battery 10 and a preset temperature.

In an embodiment, the temperature of the power battery 10 is a cell temperature of the power battery 10. In another embodiment, the temperature of the power battery 10 is a surface temperature of the power battery 10.

In this embodiment of this application, the switch module 32 disconnects the charging loop in response to that the temperature of the power battery 10 is less than the preset temperature. The switch module 32 connects the charging loop in response to that the temperature of the power battery 10 is greater than or equal to the preset temperature.

In an embodiment, the preset temperature is a preset power battery temperature. For example, the preset power battery temperature is minus 5 degrees Celsius. When the temperature of the power battery 10 is less than minus 5 degrees Celsius, the surface temperature of the power battery 10 is excessively low. The excessively low temperature of the power battery 10 causes serious capacity attenuation of the power battery 10 and low charging power of the power battery 10 or even a charging failure. The switch module 32 disconnects the charging loop in response to that the temperature of the power battery 10 is less than minus 5 degrees Celsius. This avoids low charging power or even a charging failure caused by charging the power battery 10 at a low temperature. The switch module 32 disconnects the charging loop, and the direct current voltage conversion module 33 outputs the preset direct current voltage to the positive electrode and the negative electrode of the power supply apparatus. The power supply apparatus considers that the power supply apparatus is still connected to the electric vehicle. After the charging loop is connected again, the charging can be resumed without re-swiping the card/re-scanning the QR code by the user, to reduce user operations. In addition, the direct current voltage conversion module 33 in this embodiment of this application outputs the preset direct current voltage to the positive electrode and the negative electrode of the power supply apparatus when the charging loop is disconnected. This can prevent the power supply apparatus from raising an alarm of a charging abnormality when the charging loop is disconnected, to improve user experience.

The temperature of the power battery 10 is greater than or equal to minus 5 degrees Celsius, the capacity attenuation of the power battery 10 is relatively reduced, and the power battery 10 is suitable for charging. The switch module 32 connects the charging loop in response to that the temperature of the power battery 10 is greater than or equal to 5 degrees Celsius, and the power supply apparatus may charge the power battery 10 and complete charging of the power battery 10. Because the switch module 32 connects the charging loop in response to that the temperature of the power battery 10 is greater than or equal to the preset temperature, that is, the power battery 10 is charged when it is suitable for charging, so that charging efficiency can be improved.

In this embodiment of this application, the direct current voltage conversion module 33 outputs the preset direct current voltage or stops outputting the preset direct current voltage based on a comparison result between the temperature of the power battery 10 and the preset temperature.

In an embodiment, the direct current voltage conversion module 33 outputs the preset direct current voltage in response to that the temperature of the power battery 10 is less than the preset temperature. In response to that the temperature of the power battery 10 is greater than or equal to the preset temperature, the direct current voltage conversion module 33 stops outputting the preset direct current voltage.

For example, the preset power battery temperature is minus 5 degrees Celsius. The temperature of the power battery 10 is less than minus 5 degrees Celsius. For low charging power of the power battery 10 or even a charging failure, the power battery 10 needs to be heated. The direct current voltage conversion module 33 outputs the preset direct current voltage to the positive electrode and the negative electrode of the power supply apparatus in response to that the temperature of the power battery 10 is less than 5 degrees Celsius. In this embodiment of this application, the motor controller 21 controls and drives the motor 22 to operate to heat the power battery 10. The power battery 10 is heated by driving the motor 22, and the switch module 32 controls the charging loop to be disconnected, to avoid damage to the power supply apparatus due to an alternating current that is generated when the motor controller 21 drives the motor 22 to operate and that enters the power supply apparatus. In addition, because the direct current voltage conversion module 33 outputs the preset direct current voltage to the positive electrode and the negative electrode of the power supply apparatus, even if the charging loop is disconnected, the power supply apparatus still considers that the power supply apparatus is connected to the electric vehicle. After the charging loop is connected again, charging can be resumed without re-swiping the card/re-scanning the QR code by the user, to improve user experience.

When the temperature of the power battery 10 is greater than or equal to minus 5 degrees Celsius, the power battery 10 is suitable for charging. In response to that the temperature of the power battery 10 is greater than or equal to the preset temperature, the direct current voltage conversion module 33 stops outputting the preset direct current voltage. This avoids a continuous decrease in the voltage of the power battery 10 caused by continuous output of the preset direct current voltage by the direct current voltage conversion module 33, protecting the power battery 10. For the power battery 10 whose temperature is greater than or equal to minus 5 degrees Celsius, charging efficiency can be improved by charging the power battery 10 by the power supply apparatus.

In an embodiment, the switch module 32 connects the charging loop in response to that disconnection duration of the charging loop is greater than or equal to preset duration.

In an embodiment, in response to that the disconnection duration of the charging loop is greater than or equal to the preset duration, the direct current voltage conversion module 33 stops outputting the preset direct current voltage to the positive electrode and the negative electrode of the power supply apparatus.

It should be noted that, the direct current voltage conversion module 33 outputs the preset direct current voltage to the positive electrode and the negative electrode of the power supply apparatus in response to that the temperature of the power battery 10 is less than the preset temperature, and the switch module 32 disconnects the charging loop. In this state, the motor controller 21 may drive the motor 22 to heat the power battery 10. Therefore, the disconnection duration of the charging loop is duration in which the power battery 10 is heated.

For example, the preset duration is 10 min, and the disconnection duration of the charging loop is greater than or equal to 10 min, that is, the duration in which the power battery 10 is heated is greater than or equal to 10 min. When the power battery 10 is heated within the preset duration, the temperature of the power battery 10 rises. When the temperature of the power battery 10 rises to the preset temperature, the charging power of the power battery 10 is normal, and the power battery 10 is suitable for charging. Therefore, in this embodiment of this application, in response to that the disconnection duration of the charging loop is greater than or equal to 10 min, the switch module 32 connects the charging loop, and the direct current voltage conversion module 33 stops outputting the preset direct current voltage to the positive electrode and the negative electrode of the power supply apparatus. Because the switch module 32 connects the charging loop, and the direct current voltage conversion module 33 stops outputting the preset direct current voltage to the positive electrode and the negative electrode of the power supply apparatus, the power supply apparatus can normally charge the power battery 10, and complete charging of the power battery 10.

In this embodiment of this application, the switch module 32 connects the charging loop in response to that the disconnection duration of the charging loop is greater than or equal to the preset duration. When the power battery 10 is suitable for charging, the power supply apparatus charges the power battery 10, so that charging efficiency can be improved. In addition, in response to that the disconnection duration of the charging loop is greater than the preset duration, the direct current voltage conversion module 33 stops outputting the preset direct current voltage to the positive electrode and the negative electrode of the power supply apparatus. Because the direct current voltage conversion module 33 stops outputting the preset direct current voltage to the positive electrode and the negative electrode of the power supply apparatus, it is equivalent to that the direct current voltage conversion module 33 stops working, and the direct current voltage conversion module 33 does not consume power output by the power supply apparatus, further improving charging efficiency.

In this embodiment of this application, the switch module 32 disconnects or connects the charging loop based on whether the electric vehicle operates. The direct current voltage conversion module 33 outputs the preset direct current voltage or stops outputting the preset direct current voltage based on whether the electric vehicle operates.

In one embodiment, the switch module 32 is configured to disconnect the charging loop in response to that the electric vehicle operates. The switch module 32 is configured to connect the charging loop in response to that the electric vehicle stops operating.

In an embodiment, the direct current voltage conversion module 33 is configured to output the preset direct current voltage to the positive electrode and the negative electrode of the power supply apparatus in response to that the electric vehicle operates. The direct current voltage conversion module 33 is configured to: in response to that the electric vehicle stops operating, stop outputting the preset direct current voltage to the positive electrode and the negative electrode of the power supply apparatus.

In this embodiment of this application, operation of the electric vehicle may be understood as starting the electric vehicle, but the electric vehicle does not move greatly. For example, the electric vehicle is connected to the power supply apparatus, the switch module 32 is turned on, and the power supply apparatus charges the power battery 10 through the direct current charging interface 31. In a process in which the power supply apparatus charges the power battery 10, if the electric vehicle needs to be operated, usually the user needs to click or tap to stop charging before the electric vehicle can be operated. Otherwise, an alarm of a charging abnormality is raised. However, because the direct current voltage conversion module 33 in this embodiment of this application outputs the preset direct current voltage to the positive electrode and the negative electrode of the power supply apparatus, after the switch module 32 disconnects the charging loop, the power supply apparatus does not raise an alarm even if the electric vehicle operates. This is mainly because the direct current voltage conversion module 33 outputs the preset direct current voltage to the positive electrode and the negative electrode of the power supply apparatus, so that the power supply apparatus considers that the electric vehicle is still normally connected to the power supply apparatus. Because of existence of the direct current voltage conversion module 33, the direct current voltage conversion module 33 may output voltage as required, so that the power supply apparatus does not raise an alarm of a charging abnormality after the charging loop is disconnected, and the user does not need to re-swipe the card/re-scan the QR code after clicking or tapping to stop charging, to improve user experience.

The electric vehicle stops operating, the switch module 32 connects the charging loop again, and the direct current voltage conversion module 33 stops outputting the preset direct current voltage to the positive electrode and the negative electrode of the power supply apparatus. Because the switch module 32 connects the charging loop, and the direct current voltage conversion module 33 stops outputting the preset direct current voltage to the positive electrode and the negative electrode of the power supply apparatus, the power supply apparatus can normally charge the power battery 10, and complete charging of the power battery 10. In addition, because the direct current voltage conversion module 33 stops outputting the preset direct current voltage to the positive electrode and the negative electrode of the power supply apparatus, it is equivalent to that the direct current voltage conversion module 33 stops working, and the direct current voltage conversion module 33 does not consume power output by the power supply apparatus, further improving charging efficiency.

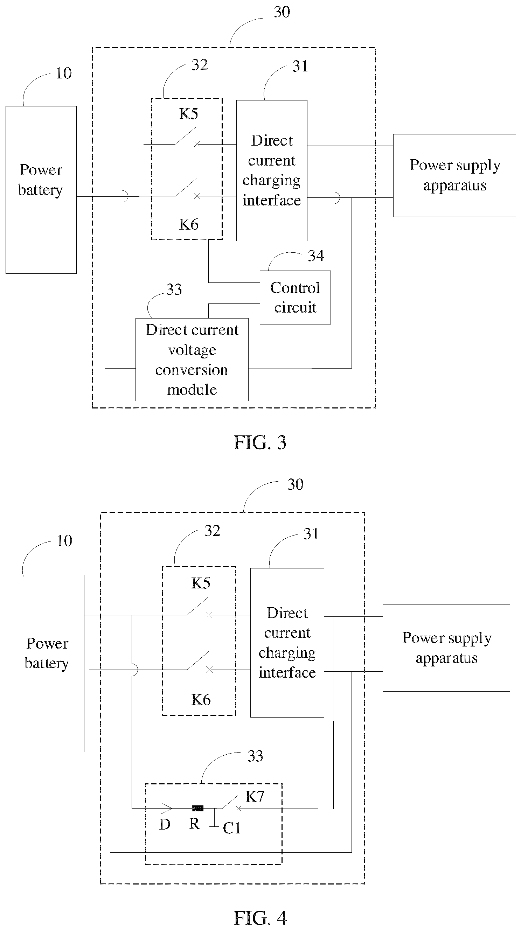

FIG. 3 is another diagram of a direct current charging apparatus according to an embodiment of this application. In an embodiment, a direct current charging apparatus 30 includes a control circuit 34. The control circuit 34 is configured to: in response to that a direct current charging interface 31 is connected to a positive electrode and a negative electrode of a power supply apparatus, control, based on a comparison result between a temperature of a power battery and a preset temperature, a direct current voltage conversion module 33 to output or stop outputting a preset direct current voltage and control a switch module 32 to connect or disconnect a charging loop.

In response to that the direct current charging interface 31 is not connected to the positive electrode or the negative electrode of the power supply apparatus, the control circuit 34 controls the direct current voltage conversion module 33 to stop outputting the preset direct current voltage.

In this embodiment of this application, the direct current charging interface 31 is connected to the positive electrode and the negative electrode of the power supply apparatus, indicating that the power supply apparatus is ready to charge a power battery 10 through the direct current charging interface 31. However, the temperature of the power battery 10 is excessively low, and low charging power or even a charging failure when charging at a low temperature is considered. Therefore, the power battery 10 whose temperature is excessively low is not suitable for charging. Therefore, the control circuit 34 may control, based on the comparison result between the temperature of the power battery 10 and the preset temperature, the direct current voltage conversion module 33 to output or stop outputting the preset direct current voltage, and control the switch module 32 to connect or disconnect the charging loop.

Specifically, in response to that the temperature of the power battery 10 is less than the preset temperature, the control circuit 34 controls the direct current voltage conversion module 33 to output the preset direct current voltage, and controls the switch module 32 to disconnect the charging loop. In this case, the motor controller 21 drives the motor 22 to operate to heat the power battery 10. As the temperature of the power battery 10 gradually rises, in response to that the temperature of the power battery 10 is greater than or equal to the preset temperature, the power battery 10 is suitable for charging and the control circuit 34 controls the direct current voltage conversion module 33 to stop outputting the preset direct current voltage, and controls the switch module 32 to connect the charging loop. Charging the power battery 10 when the temperature of the power battery 10 is suitable can improve the charging efficiency.

The direct current charging interface 31 is not connected to the positive electrode or the negative electrode of the power supply apparatus, indicating that the power supply apparatus does not charge the power battery 10. The power supply apparatus does not raise an alarm of a charging abnormality, and the direct current voltage conversion module 33 does not need to output the preset direct current voltage to the positive electrode and the negative electrode of the power supply apparatus. Therefore, the direct current voltage conversion module 33 stops outputting the preset direct current voltage to the positive electrode and the negative electrode of the power supply apparatus. If the direct current charging interface 31 is not connected to the positive electrode or the negative electrode of the power supply apparatus, and the direct current voltage conversion module 33 still outputs the preset direct current voltage to the positive electrode and the negative electrode of the power supply apparatus, this further causes a decrease of a voltage of the power battery 10, reducing a lifespan of the power battery 10.

In this embodiment of this application, in response to that the direct current charging interface 31 is connected to the positive electrode and the negative electrode of the power supply apparatus, the control circuit 34 controls, based on the comparison result between the temperature of the power battery 10 and the preset temperature, the direct current voltage conversion module 33 to output or stop outputting the preset direct current voltage, and controls the switch module 32 to connect or disconnect the charging loop. This avoids low charging power or even a charging failure caused by charging the power battery 10 when the temperature of the power battery 10 is excessively low, and further prevents the power supply apparatus from raising an alarm of a charging abnormality when the power supply apparatus detects that the charging loop is disconnected. In response to that the direct current charging interface 31 is not connected to the positive electrode or the negative electrode of the power supply apparatus, the direct current voltage conversion module 33 stops outputting the preset direct current voltage to the positive electrode and the negative electrode of the power supply apparatus. This avoids a continuous decrease in the voltage of the power battery 10 caused by continuous output of the preset direct current voltage converted from the power battery 10, to the positive electrode and the negative electrode of the power supply apparatus by the direct current voltage conversion module 33, protecting the power battery 10.

In an embodiment, the electric vehicle includes a motor controller 21 and a motor 22. The motor controller 21 is configured to connect or disconnect a discharging loop between the power battery 10 and the motor 22.

The control circuit 34 is configured to: in response to that the temperature of the power battery 10 is less than the preset temperature, control the motor controller 21 to connect the discharging loop.

The control circuit 34 is configured to: in response to that the temperature of the power battery 10 is greater than or equal to the preset temperature, control the motor controller 21 to disconnect the discharging loop.

In this embodiment of this application, the temperature of the power battery 10 is less than the preset temperature, and the power battery 10 is not suitable for charging. The control circuit 34 controls the motor controller 21 to connect the discharging loop. In a process of charging and discharging the power battery 10, a current generates heat on internal resistor of the power battery 10, so that heating of the power battery 10 is implemented.

As the power battery 10 is continuously heated, the temperature of the power battery 10 gradually rises. In response to that the temperature of the power battery 10 is greater than or equal to the preset temperature, the power battery 10 is suitable for charging. The control circuit 34 controls the motor controller 21 to disconnect the discharging loop, to avoid overtemperature of the power battery 10. When the power battery 10 is suitable for charging, the switch module 32 connects the charging loop formed by the positive electrode and the negative electrode of the power supply apparatus and a positive electrode and a negative electrode of the power battery to charge the power battery 10, so that charging efficiency can be improved.

In this embodiment of this application, in response to that the temperature of the power battery 10 is less than the preset temperature, the control circuit 34 controls the motor controller 21 to connect the discharging loop, to heat the power battery 10. This helps improve charging efficiency of the power battery 10. As the temperature of the power battery 10 rises, in response to that the temperature of the power battery 10 is greater than or equal to the preset temperature, the control circuit 34 controls the motor controller 21 to disconnect the discharging loop, to avoid overtemperature of the power battery 10.

In an embodiment, the direct current charging interface 31 includes two battery connection terminals and two power source connection terminals. The two battery connection terminals are respectively configured to connect to the positive electrode and the negative electrode of the power battery 10. The two power source connection terminals are respectively configured to connect to the positive electrode and the negative electrode of the power supply apparatus.

The direct current voltage conversion module 33 receives, through the two battery connection terminals, power supplied by the power battery 10. The direct current voltage conversion module 33 outputs the preset direct current voltage through the two power source connection terminals.

In this embodiment of this application, the two battery connection terminals and the two power source connection terminals are terminals on the direct current charging interface 31. The direct current voltage conversion module 33 receives, through the two battery connection terminals, power supplied by the power battery 10, and outputs the preset direct current voltage to the power supply apparatus through the two power source connection terminals. This can prevent the power supply apparatus from raising an alarm caused by a charging abnormality. In addition, the direct current voltage conversion module 33 is connected to the two battery connection terminals and the two power source connection terminals on the direct current charging interface 31, and can be compatible with terminals on the direct current charging interface 31. This facilitates integration.

FIG. 4 is another diagram of a direct current charging apparatus according to an embodiment of this application. The following describes a circuit topology diagram of a direct current voltage conversion module 33 with reference to FIG. 4.

In an embodiment, the direct current voltage conversion module 33 includes a diode, a resistor, a capacitor, and a controllable switch.

An anode of the diode is connected to one battery connection terminal. A cathode of the diode is connected to one power source connection terminal through the resistor and the controllable switch. The battery connection terminal is configured to connect to a positive electrode of a power battery 10. The power source connection terminal is configured to connect to a positive electrode of a power supply apparatus.

One end of the capacitor is connected between the resistor and the switch. The other end of the capacitor is connected to the other battery connection terminal and the other power source connection terminal. The other battery connection terminal is configured to connect to a negative electrode of the power battery 10. The other power source connection terminal is configured to connect to a negative electrode of the power supply apparatus.

Refer to FIG. 4. A direct current voltage conversion module 33 includes a diode D, a resistor R, a capacitor C1, and a switch K7. The diode D, the resistor R, and the switch K7 are connected in series between the positive electrode of the power battery 10 and the positive electrode of the power supply apparatus. The end of the capacitor C1 is connected between the resistor R and the switch K7. The other end of the capacitor C1 is connected between the negative electrode of the power battery 10 and the negative electrode of the power supply apparatus.

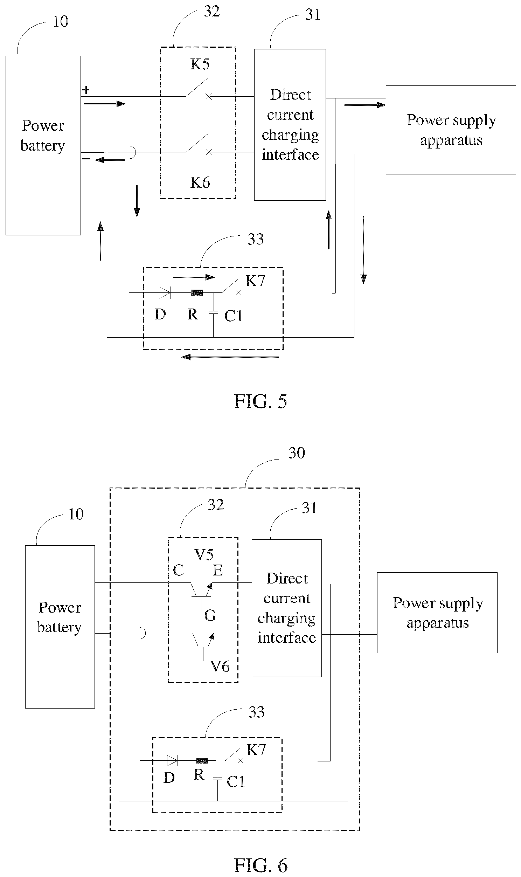

When the direct current voltage conversion module 33 needs to output a preset direct current voltage to the positive electrode and the negative electrode of the power supply apparatus, the switch K7 is turned on, and a current flow direction is an arrow direction in FIG. 5. A current flows out from the positive electrode of the power battery 10 and flows into the positive electrode of the power supply apparatus through the diode D, the resistor R, and the switch K7. The current flows out from the negative electrode of the power supply apparatus and flows into the negative electrode of the power battery 10. This forms a direct current voltage output loop.

When the direct current voltage conversion module 33 does not need to output the preset direct current voltage to the positive electrode and the negative electrode of the power supply apparatus, the switch K7 is turned off, and the direct current voltage conversion module 33 cannot output the preset direct current voltage to the power supply apparatus.

It should be noted that the capacitor C1 and the resistor R together form a filter circuit, configured to filter out an alternating current that is superimposed in a direct current and that is output by the power battery 10. For example, it is assumed that the power battery 10 outputs a direct current of 380 V, and an alternating current of a size of 50 V is superimposed on the direct current. The alternating current may be filtered out by setting a capacity of the capacitor C1 and a size of the resistor R, to output the direct current of 380 V to the power supply apparatus.

In this embodiment of this application, the direct current voltage conversion module 33 includes the diode D, the resistor R, the capacitor C1, and the switch K7. When the switch K7 is turned on, the direct current voltage conversion module 33 outputs the preset direct current voltage to the power supply apparatus. When the switch K7 is turned off, the direct current voltage conversion module 33 stops outputting the preset direct current voltage to the power supply apparatus. A function of the direct current voltage conversion module 33 can be implemented through a simple operation. In addition, the direct current voltage conversion module 33 includes a few components. This facilitates integration, reduces costs, and has specific advantages.

In one embodiment, the switch module 32 includes other two controllable switches.

One controllable switch is configured to connect or disconnect one power source connection terminal and one battery connection terminal.

The other controllable switch is configured to connect or disconnect the other power source connection terminal and the other battery connection terminal.

In this embodiment of this application, the controllable switch may be a power switching transistor, a relay, or the like. The power switching transistor may be one or more of a plurality of types of switching transistors such as a metal-oxide semiconductor field effect transistor (metal-oxide semiconductor field effect transistor, MOSFET) and an insulated gate bipolar transistor (insulated gate bipolar transistor, IGBT). The relay may be one or more of a plurality of types of relays such as a signal relay and a temperature relay. This is not listed one by one in this embodiment of this application.

In this embodiment of this application, that the power switching transistor is an IGBT is used as an example. The IGBT includes a gate G, a collector C, and an emitter E. The gate G of the IGBT is configured to control turn-on or turn-off of the IGBT. When the IGBT is turned on, a current can be transmitted between the collector C and the emitter E. When the IGBT is turned off, no current can be transmitted between the collector C and the emitter E.

FIG. 6 is another diagram of a direct current charging apparatus according to an embodiment of this application. Refer to FIG. 6. The switch module 32 includes a switching transistor V5 and a switching transistor V6. A collector C of the switching transistor V5 is connected to a positive electrode of a power battery, and an emitter E of the switching transistor V5 is connected to a positive electrode of a power supply apparatus. The collector C of the switching transistor V6 is connected to a negative electrode of the power battery, and an emitter E of the switching transistor V6 is connected to a negative electrode of the power supply apparatus. A gate G of the switching transistor V5 and a gate G of the switching transistor V6 are connected to a control apparatus (not shown in the figure), configured to control a voltage between the gate G and the emitter E. When t the voltage between the gate G and the emitter E is greater than a turn-on voltage, the IGBT is turned on. A power supply apparatus charges a power battery 10 through a direct current charging interface 31.

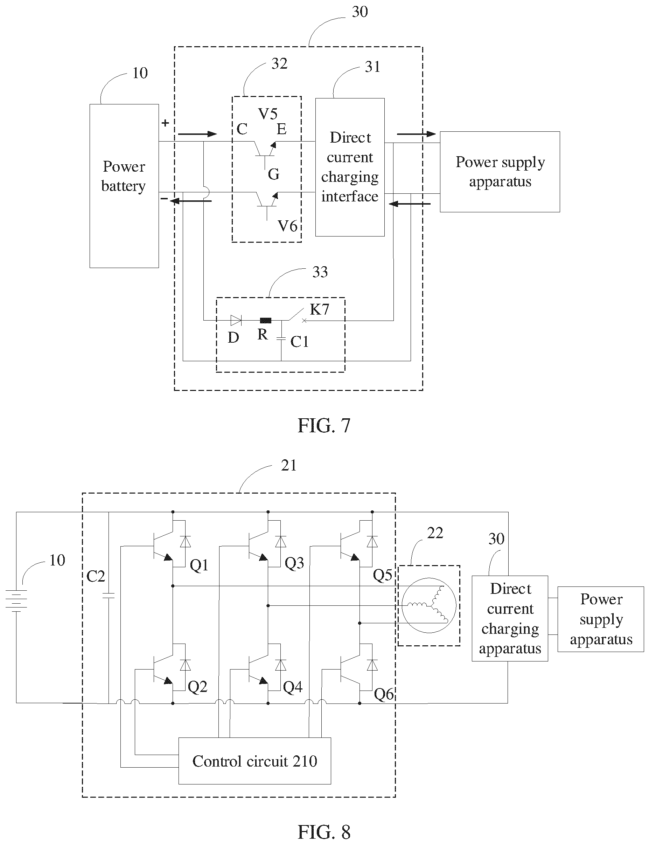

When the power supply apparatus charges the power battery 10 through the direct current charging interface 31, a battery flow direction is an arrow direction in FIG. 7. A current flows out from the positive electrode of the power battery 10 and flows into the positive electrode of the power supply apparatus through the switching transistor V5, and the current flows out from the negative electrode of the power supply apparatus and flows into the negative electrode of the power battery 10 through the switching transistor V6. This forms a charging loop.

In an embodiment, a powertrain 20 includes a motor 22, a motor controller 21, and the direct current charging apparatus 30 in any one of the foregoing embodiments. The motor controller 21 is configured to connect or disconnect a discharging loop between a power battery 10 and the motor 22.

In this embodiment of this application, the motor controller 21 is configured to connect or disconnect the discharging loop between the power battery 10 and the motor 22. For example, a temperature of the power battery 10 is less than a preset temperature. The power battery 10 is not suitable for charging, considering excessively low charging power or even a charging failure when the temperature of the power battery 10 is excessively low. The motor controller 21 controls connection of the discharging loop between the power battery 10 and the motor 22, and in a process of charging and discharging the power battery 10, a current generates heat on internal resistor of the power battery 10, so that heating of the power battery 10 is implemented.

As the power battery 10 is continuously heated, the temperature of the power battery 10 gradually rises. When the temperature of the power battery 10 is greater than or equal to the preset temperature, the power battery 10 is suitable for charging. The motor controller 21 controls disconnection of the discharging loop between the power battery 10 and the motor 22, to avoid overtemperature of the power battery 10. In addition, when the power battery 10 is suitable for charging, a switch module 32 connects a charging loop formed by a positive electrode and a negative electrode of a power supply apparatus and a positive electrode and a negative electrode of the power battery to charge the power battery 10, so that charging efficiency can be improved.

In this embodiment of this application, the motor controller 21 is configured to connect or disconnect the discharging loop between the power battery 10 and the motor 22.to that The motor controller 21 controls the connection of the discharging loop in response to that the temperature of the power battery 10 is less than the preset temperature, to heat the power battery 10. This helps improve charging efficiency of the power battery 10. As the temperature of the power battery 10 rises,to that the motor controller 21 controls the disconnection of the discharging loop in response to that the temperature of the power battery 10 is greater than or equal to the preset temperature, to avoid overtemperature of the power battery 10.

In an embodiment, the motor controller 21 is configured to connect the discharging loop in response to that the switch module 32 disconnects the charging loop.

In an embodiment, the motor controller 21 is configured to disconnect the discharging loop in response to that connection duration of the discharging loop is greater than or equal to preset duration.

In this embodiment of this application, if the switch module 32 disconnects the charging loop, it indicates that the switch module 32 is not suitable for charging the power battery 10 in this case. This may be because the temperature of the power battery 10 is excessively low, or may be because an electric vehicle needs to operate. If the charging loop is disconnected because the temperature of the power battery 10 is excessively low, the motor controller 21 connects the discharging loop in response to that the switch module 32 disconnects the charging loop, to heat the power battery 10. This avoids low charging power or even a charging failure when charging the power battery 10 when the temperature of the power battery 10 is excessively low.

In this embodiment of this application, the discharging loop is connected, and the motor controller 21 drives the motor 22 to continuously heat the power battery 10. As the discharging loop is connected, the temperature of the power battery 10 continuously rises. When the connection duration of the discharging loop is greater than or equal to the preset duration, the power battery 10 is suitable for charging. The motor controller 21 disconnects the discharging loop in response to that the connection duration of the discharging loop is greater than or equal to the preset duration, to stop heating the power battery 10. This avoids impact of an excessively high temperature of the power battery 10 on a lifespan of the power battery 10.

In an embodiment, the motor controller 21 includes a control circuit and an inverter circuit. The inverter circuit includes three bridge arm circuits. Two ends of each bridge arm are respectively configured to connect to a positive electrode and a negative electrode of the power battery. Bridge arm midpoints of three bridge arm circuits each are configured to connect to a one-phase winding of the motor 22.

The control circuit controls an upper bridge arm switching transistor of one bridge arm to be turned on, a lower bridge arm switching transistor of another bridge arm to be turned on, and the motor controller 21 to connect the discharging loop.

The control circuit controls upper bridge arm switching transistors and lower bridge arm switching transistors of a plurality of bridge arms to remain in a turn-off state, and the motor controller 21 to disconnect the discharging loop.

The control circuit in this embodiment of this application may be the control circuit 34 in the direct current charging apparatus 30 in FIG. 3, or may be the control circuit in the motor controller 21. This is not limited.

In this embodiment of this application, when the temperature of the power battery 10 is less than or equal to the preset temperature, if the power battery 10 is continuously charged, this may cause severe capacity attenuation of the power battery 10, and low charging power of the power battery 10 or even a charging failure. Accordingly, the control circuit controls turn-on/turn-off of the switching transistor to heat the power battery 10.

The switching transistor included in the bridge arm circuit in this embodiment of this application may be one or more of a plurality of types of switching transistors, such as a MOSFET and an IGBT. This is not specifically limited.

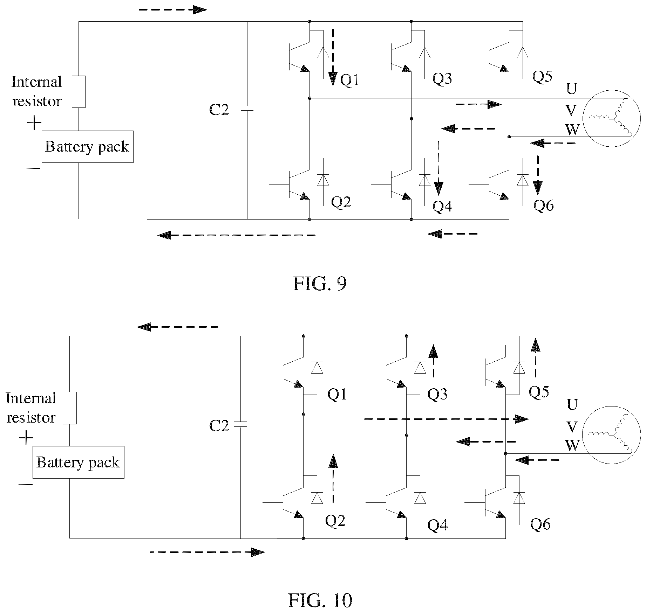

FIG. 8 is a diagram of a powertrain according to an embodiment of this application. Refer to FIG. 8. A motor controller 21 includes six switching transistors (including Q1, Q2, Q3, Q4, Q5, and Q6). Control electrodes of the six switching transistors are all connected to a control circuit 210. The control circuit 210 controls turn-on or turn-off of the six switching transistors so that a power battery 10 is in cyclic discharging and charging, to heat the power battery 10, which is described in detail below with reference to FIG. 9 and FIG. 10.

FIG. 9 is a schematic of a discharging loop according to an embodiment of this application. FIG. 10 is a schematic of a charging loop according to an embodiment of this application. In FIG. 9 and FIG. 10, the power battery 10 is equivalent to a battery pack and internal resistor.

In FIG. 9, the control circuit 210 controls the switching transistors Q1, Q4, and Q6 to be turned on, so that a discharging loop is formed between the power battery 10, Q1, Q4, Q6, and a motor 22. In FIG. 10, the control circuit 210 controls the switching transistors Q2, Q3, and Q5 to be turned on, so that a charging loop is formed between the power battery 10, Q2, Q3, Q5, and a motor 22.

Refer to FIG. 9. The battery pack outputs energy, a current flows out from a positive electrode, flows into the motor from a U phase through the internal resistor and the switching transistor Q1, and flows out from a V phase and a W phase of the motor separately. After flowing out from the V phase of the motor, the current flows into a negative electrode of the battery through the switching transistor Q4. After flowing out from the W phase of the motor, the current flows into the negative electrode of the battery through the switching transistor Q6. This forms the battery discharging loop, and the motor stores energy in this process. In addition, in the battery discharging process, because the current flows through the internal resistor of the battery, the internal resistor of the battery generates heat, so that heating of the power battery 10 is implemented.

Refer to FIG. 10. The motor releases energy, a current flows out from a V phase and a W phase of the motor, flows into the battery through the switching transistor Q3 after flowing out from the V phase of the motor, and flows into the battery through the switching transistor Q5 after flowing out from the W phase of the motor. After passing through the internal resistor and the battery pack, the current flows into a U phase of the motor through the switching transistor Q2, and flows out from the V phase and W phase of the motor separately. This forms the battery charging loop, and the battery stores energy in this process. In addition, in the battery charging process, because the current flows through the internal resistor of the battery, the internal resistor of the battery generates heat, so that heating of the power battery 10 is implemented.

In conclusion, in a charging and discharging process of the power battery 10, currents flow through the internal resistor of the power battery 10, and the currents continuously generate heat on the internal resistor of the power battery 10. Therefore, the power battery 10 is continuously in a heating state.

It should be noted that the discharging loop and the charging loop shown in FIG. 9 and FIG. 10 are merely examples for description. In some possible implementations, the control circuit 210 controls different switching transistors to be turned on or turned off, to heat the power battery 10.

For example, the control circuit 210 controls the switching transistors Q2, Q3, and Q6 to be turned on, so that a discharging loop is formed between the power battery 10, Q2, Q3, Q6, and the motor 22. The control circuit 210 controls the switching transistors Q1, Q4, and Q5 to be turned on, so that a charging loop is formed between the battery 10, Q1, Q4, Q5, and the motor 22.

In this embodiment of this application, the control circuit controls an upper bridge arm switching transistor of one bridge arm and a lower bridge arm switching transistor of another bridge arm to be turned on, and the motor controller to connect the discharging loop, to heat the power battery 10. This helps improve charging efficiency of the power battery 10. The control circuit controls upper bridge arm switching transistors and lower bridge arm switching transistors of a plurality of bridge arms to remain in a turn-off state, and the motor controller to disconnect the discharging loop, to stop heating the power battery 10. This avoids impact of overtemperature of the power battery 10 on a lifespan of the power battery. When the motor controller 21 controls connection or disconnection of the discharging loop, the control circuit may further control disconnection of the charging loop, to heat the power battery 10 and avoid damage to the power supply apparatus due to an alternating current that enters the power supply apparatus and that is generated when the motor operates because the control circuit controls turn-on/turn-off of the switching transistor.

This application further provides an electric vehicle. The electric vehicle includes a power battery 10, a vehicle controller, a motor controller 21, a motor 22, and the direct current charging apparatus 30 in any one of the foregoing embodiments.

The power battery 10 includes a battery management unit. The battery management unit is configured to detect a temperature of the power battery 10.

The vehicle controller is configured to control at least one of the direct current charging apparatus 30 or the motor controller 21 based on a comparison result between the temperature of the power battery 10 and a preset temperature.

In this embodiment of this application, in response to that the temperature of the power battery 10 is less than the preset temperature, the vehicle controller controls the motor controller 21 to connect a discharging loop between the power battery 10 and the motor 22, to heat the power battery 10. This avoids low charging power or even a charging failure caused by charging the power battery 10 when the temperature of the power battery 10 is excessively low. In addition, in response to that the temperature of the power battery 10 is less than the preset temperature, the vehicle controller controls the direct current charging apparatus 30 to output a preset direct current voltage, so that an alarm of a charging abnormality raised by a power supply apparatus for disconnection of a charging loop can be avoided, to further reduce user operations and improve user experience.

As the temperature of the power battery 10 gradually rises, in response to that the temperature of the power battery 10 is greater than or equal to the preset temperature, the vehicle controller controls the motor controller 21 to disconnect the discharging loop between the power battery 10 and the motor 22, to avoid impact of overtemperature of the power battery 10 on a lifespan of the power battery. In addition, in response to that the temperature of the power battery 10 is greater than or equal to the preset temperature, the vehicle controller controls the direct current charging apparatus 30 to stop outputting the preset direct current voltage. This further avoids a continuous decrease in a voltage of the power battery 10 caused by continuous output of the preset direct current voltage converted from the power battery 10, to a positive electrode and a negative electrode of the power supply apparatus by the direct current charging apparatus 30, protecting the power battery 10.

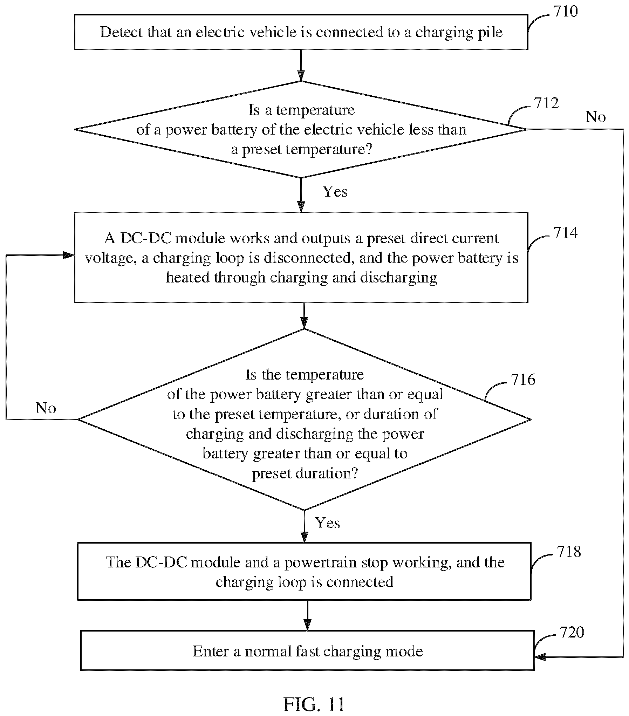

For better understanding of the solutions in this application, FIG. 11 is a diagram of a battery low temperature heating method according to an embodiment of this application. The method includes steps 710 to 720.

710: Detect that an electric vehicle is connected to a charging pile.

712: Determine whether a temperature of a power battery of the electric vehicle is less than a preset temperature.

If yes, step 714 is performed. If no, step 720 is performed.

714: A direct current-direct current (direct current-direct current, DC-DC) module works and outputs a preset direct current voltage, a charging loop is disconnected, and the power battery is heated through charging and discharging.

The DC-DC module is the direct current voltage conversion module 33 in the foregoing embodiment.

716: Determine whether the temperature of the power battery is greater than or equal to the preset temperature, or whether duration of charging and discharging the power battery is greater than or equal to preset duration.

If yes, step 718 is performed. If no, return to perform step 714.

718: The DC-DC module and a powertrain stop working, and the charging loop is connected.

In step 718, the DC-DC module may not stop working. This is not limited.

720: Enter a normal fast charging mode.

In this embodiment of this application, after it is detected that the electric vehicle is connected to the charging pile, it is first determined whether the temperature of the power battery of the electric vehicle is less than the preset temperature, and if not, fast charging starts. If yes, because the temperature of the power battery is less than the preset temperature, it is not suitable to directly charge the power battery. Therefore, the DC-DC module may be enabled to work, and the preset direct current voltage may be output to the charging pile, so that the charging pile and the electric vehicle form a deceptive connection, the charging pile is suspended from charging the battery, and the charging loop is disconnected. A motor controller controls heating of the power battery. When the temperature of the power battery is greater than or equal to the preset temperature, or the duration of charging and discharging the battery is greater than or equal to the preset duration, the DC-DC module and the powertrain are stopped from working, and the charging loop is connected to enter the normal fast charging mode.

It should be understood that the specific examples in the foregoing embodiments are merely intended to help a person skilled in the art better understand embodiments of this application, but are not intended to limit the scope of embodiments of this application. It should be further understood that sequence numbers of the foregoing processes do not mean execution sequences. The execution sequences of the processes should be determined based on functions and internal logic of the processes, and should not be construed as any limitation on the implementation processes of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A direct current charging apparatus, wherein the direct current charging apparatus is configured to charge a power battery of an electric vehicle or a hybrid electric vehicle, and the direct current charging apparatus comprises a direct current charging interface, a switch module, and a direct current voltage conversion module;
the direct current charging interface is configured to connect a positive electrode and a negative electrode of a power supply apparatus and a positive electrode and a negative electrode of the power battery to form a charging loop;
the switch module is configured to connect or disconnect the charging loop; and
the direct current voltage conversion module is configured to output a preset direct current voltage to the positive electrode and the negative electrode of the power supply apparatus.

2. The direct current charging apparatus according to claim 1, wherein the switch module is configured to:
disconnect the charging loop in response to that the direct current voltage conversion module outputs the preset direct current voltage.

3. The direct current charging apparatus according to claim 1 or 2, wherein the direct current voltage conversion module is configured to:
in response to that the switch module connects the charging loop, stop outputting the preset direct current voltage.

4. The direct current charging apparatus according to any one of claims 1 to 3, wherein the switch module is configured to:
disconnect the charging loop in response to that a temperature of the power battery is less than a preset temperature; or
connect the charging loop in response to that a temperature of the power battery is greater than or equal to a preset temperature.

5. The direct current charging apparatus according to any one of claims 1 to 4, wherein the direct current voltage conversion module is configured to:
output the preset direct current voltage in response to that the temperature of the power battery is less than the preset temperature; or
in response to that the temperature of the power battery is greater than or equal to the preset temperature, stop outputting the preset direct current voltage.

6. The direct current charging apparatus according to any one of claims 1 to 5, wherein the direct current charging apparatus comprises a control circuit, and the control circuit is configured to:
in response to that the direct current charging interface is connected to the positive electrode and the negative electrode of the power supply apparatus, control, based on a comparison result between the temperature of the power battery and the preset temperature, the direct current voltage conversion module to output or stop outputting the preset direct current voltage, and control the switch module to connect or disconnect the charging loop; or
in response to that the direct current charging interface is not connected to the positive electrode or the negative electrode of the power supply apparatus, control the direct current voltage conversion module to stop outputting the preset direct current voltage.

7. The direct current charging apparatus according to claim 6, wherein the electric vehicle comprises a motor controller and a motor, the motor controller is configured to connect or disconnect a discharging loop between the power battery and the motor, and the control circuit is configured to:
in response to that the temperature of the power battery is less than the preset temperature, control the motor controller to connect the discharging loop; or
in response to that the temperature of the power battery is greater than or equal to the preset temperature, control the motor controller to disconnect the discharging loop.

8. The direct current charging apparatus according to any one of claims 1 to 7, wherein the direct current charging interface comprises two battery connection terminals and two power source connection terminals, the two battery connection terminals are respectively configured to connect to the positive electrode and the negative electrode of the power battery, and the two power source connection terminals are respectively configured to connect to the positive electrode and the negative electrode of the power supply apparatus; and
the direct current voltage conversion module receives, through the two battery connection terminals, power supplied by the power battery, and the direct current voltage conversion module outputs the preset direct current voltage through the two power source connection terminals.

9. The direct current charging apparatus according to claim 8, wherein the direct current voltage conversion module comprises a diode, a resistor, a capacitor, and a controllable switch;
an anode of the diode is connected to one battery connection terminal, a cathode of the diode is connected to one power source connection terminal through the resistor and the controllable switch, the battery connection terminal is configured to connect to the positive electrode of the power battery, and the power source connection terminal is configured to connect to the positive electrode of the power supply apparatus; and
one end of the capacitor is connected between the resistor and the switch, the other end of the capacitor is connected to the other battery connection terminal and the other power source connection terminal, the other battery connection terminal is configured to connect to the negative electrode of the power battery, and the other power source connection terminal is configured to connect to the negative electrode of the power supply apparatus.

10. The direct current charging apparatus according to claim 8, wherein the switch module comprises other two controllable switches;
one controllable switch is configured to connect or disconnect one power source connection terminal and one battery connection terminal; and
the other controllable switch is configured to connect or disconnect the other power source connection terminal and the other battery connection terminal.

11. A powertrain, wherein the powertrain comprises a motor, a motor controller, and the direct current charging apparatus according to any one of claims 1 to 10, and the motor controller is configured to connect or disconnect a discharging loop between the power battery and the motor.

12. The powertrain according to claim 11, wherein the motor controller is configured to:
connect the discharging loop in response to that the switch module disconnects the charging loop.

13. The powertrain according to claim 11 or 12, wherein the motor controller is configured to:
disconnect the discharging loop in response to that connection duration of the discharging loop is greater than or equal to preset duration.

14. The powertrain according to any one of claims 11 to 13, wherein the motor controller comprises a control circuit and an inverter circuit, the inverter circuit comprises three bridge arm circuits, two ends of each bridge arm are respectively configured to connect a positive electrode and a negative electrode of the power battery, and bridge arm midpoints of the three bridge arm circuits each are configured to connect to a one-phase winding of the motor; and
the control circuit controls an upper bridge arm switching transistor of one bridge arm to be turned on, a lower bridge arm switching transistor of another bridge arm to be turned on, and the motor controller to connect the discharging loop; or
the control circuit controls upper bridge arm switching transistors and lower bridge arm switching transistors of the plurality of bridge arms to remain in a turn-off state, and the motor controller to disconnect the discharging loop.

15. An electric vehicle, wherein the electric vehicle comprises a power battery, a vehicle controller, a motor controller, a motor, and the direct current charging apparatus according to any one of claims 1 to 10;
the power battery comprises a battery management unit, and the battery management unit is configured to detect a temperature of the power battery; and
the vehicle controller is configured to control at least one of the direct current charging apparatus or the motor controller based on a comparison result between the temperature of the power battery and a preset temperature.
